# EUROPEAN PATENT SPECIFICATION

(11) **EP 1 640 237 B1**
(45) Date of publication and mention of the grant of the patent: **01.01.2014**
(21) Application number: 05380043.9
(22) Date of filing: 07.03.2005
(51) Int. Cl.: B62B 5/06, B62B 1/00, B62B 3/02

(54) **A shopping cart**
Ein Einkaufswagen
Chariot à provisions

(30) Priority: 22.09.2004 ES 200402164
(43) Date of publication of application: 29.03.2006
(73) Proprietor: Germans Server, S.L., 03750 Pedreguer (Alicante) (ES)
(72) Inventor: Server Pérez, Juan, 03750 Pedreguer (Alicante) (ES)
(74) Representative: Dosterschill, Peter

(56) References cited:
- EP-A- 0 348 552
- CA-A1- 2 390 896
- CA-A1- 2 412 506
- DE-U1- 20 118 579
- DE-U1- 29 920 031
- ES-U- 0 287 348
- ES-U- 1 019 031
- ES-U- 1 046 485
- ES-U- 1 054 019
- US-A- 5 439 239

## Description

### OBJECT OF THE INVENTION

As expressed in the title of this specification, the present invention refers to a shopping cart whose novelty is centered on the overall structure of the frame.

Basically, it refers to some improvements concerning utility models ES-1001554-U, ES-1041856-U and ES-1044006-U, the latter belonging to the same owner as the present application.

A first improvement is the location of a pair of front wheels taking advantage of some bars or tiltable bottom parts of the folding system.

A second improvement refers to the folding system of a top part or handle of the frame; this part folding downward and forward and facing the bottom part of this frame when folded.

### BACKGROUND OF THE INVENTION

Currently there are different types of shopping carts, among which it is worth pointing out Spanish utility models nos. U-8700341(ES-2001554-U), U-9803106(ES-1041856-U) and U-9902348 (ES-1044CO6-U), and European Patent Application EP-A-0348552.

ES-1001554-U mentions a frame or structure for shopping carts that claims the folded form as well as the bottom platform in order to support the bag as well as the folding system of the handle of the cart.

ES-1041856-U mentions an improvement of the preceding model, wherein different problems that the earlier embodiment had are simplified and solved.

ES-1044006-U refers to a shopping cart that includes two pairs of wheels coupled to folding supports and this third registration has significant improvements of convenience and use with respect to carts that only have two wheels.

EPA-0348552 discloses the features of the preamble of claim 1 and describes another shopping cart comprising a frame structure with a top part and a bottom part, a folding base coupled to a lower portion of the bottom part, and tow inward-folding U-shaped frameworks to each of which one of two wheels is coupled.

### DESCRIPTION OF THE INVENTION

The shopping cart that constitutes the object of the invention comprises a frame structure comprised of a top part or handle and a bottom part or primary structure, to whose low area a base or folding seat platform of a bag couples, as well as a rear folding support with two rear wheels. Furthermore, it includes a pair of front wheels and a leg coupled to said base.

Starting with this premise, a first characteristic is that each of the two front wheels is coupled to a single transversal shaft which is coupled in turn by its ends respectively to one of a pair of side bars that is hinged by one of its ends to the folding base and by its other end to bottom part of the frame structure.

Essentially, the joint of the pair of wheels is coupled under the straight line that joins each one of the end rotating points of the transversal bars, although they could be located at other points.

Another characteristic is that the top part of the frame structure is folding coupling jointedly to a top cross member of the bottom part, at the same time that there are locking means in order to keep this top part stable when the cart is in the unfold position, as a continuation of the bottom part of this frame structure. Meanwhile in the folded position, the top part folds down against the bottom part.

The locking means to keep this top part of the frame stable in the unfolded position consist of a transversal support coupled to and guided on the branches of the bottom part of the frame, at the same time that said support in a raised position provides immobilization of the top part of the frame by means of some complementary anchoring parts connected to the transversal support and the top part of the frame. The transversal support has some stable hooking means in the raised position in order to ensure that the cart remains unfolded.

Said jointed coupling of the top part of the frame structure is coupled to the bottom part by means of some side parts integral to two branches of the top part of the frame structure.

The transversal support has female parts wherein male parts of the top part of the frame structure are inserted in the unfolded position. These male parts constitute far ends of the top part of the frame structure.

Another alternative to that which has been said in the preceding paragraph, is that the transversal support has some male parts that are inserted in some female parts formed in the top part of the frame structure in the unfolded position.

The stable hooking means of the transversal support in the raised position consist of an enveloping portion integral to the support that is coupled by pressure to a cross member of the bottom part of the frame structure encircling said cross member.

With the described arrangement, we obtain a folding system in a shopping cart structure with four wheels which as we have already seen in other patents or utility models, for example, ES-1044006-U, has important advantages of convenience and use with respect to carts that only have two wheels.

The advantage of this use with respect to other carts with four wheels, such as the above-cited utility model belonging to the applicant hereof, mainly lies on its simplicity, easy usability and size in its folded position.

The fact that the rotating axis of the two accessory front wheels is located under the alignment of the jointing points of the two side bars, facilitates good working in the sense that since the wheels correctly contact the ground keeping good stability of the cart on the whole in the unfolded position, and likewise facilitates folding and unfolding.

The handle or top part of the frame is comprised of a structure independent from the rest of the cart and that is foldable over the bottom part, which constitutes the entire handle structure.

Hence, it is a question of jointing said top handle over the horizontal section of said primary structure, upon which a type of bridge that is provided with anchors for the ends of the top handle, vertically slides.

Therefore, we see that said anchors are comprised of respective recesses where some pivots integral to the top handle are inserted, as well as a small half round platform, to which the horizontal section on which the top handle pivots would be coupled.

In this way, a solid anchoring resistant to the weight that a shopping cart should normally endure during use is obtained.

Hereinafter in order to provide a better understanding of this specification and forming an integral part thereof, some figures wherein the object of the invention has been represented in an illustrative and non-restrictive manner are attached.

### BRIEF DESCRIPTION OF THE DRAWINGS

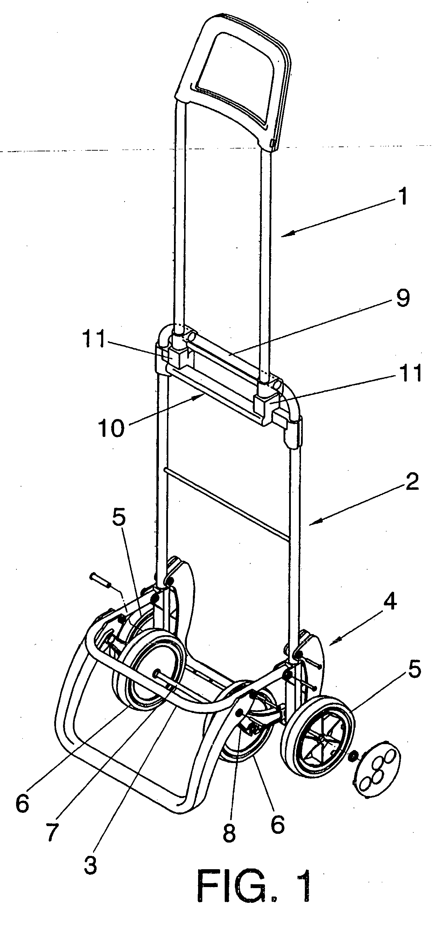

Figure 1 shows a perspective view of the shopping cart of the invention in an unfolded position.

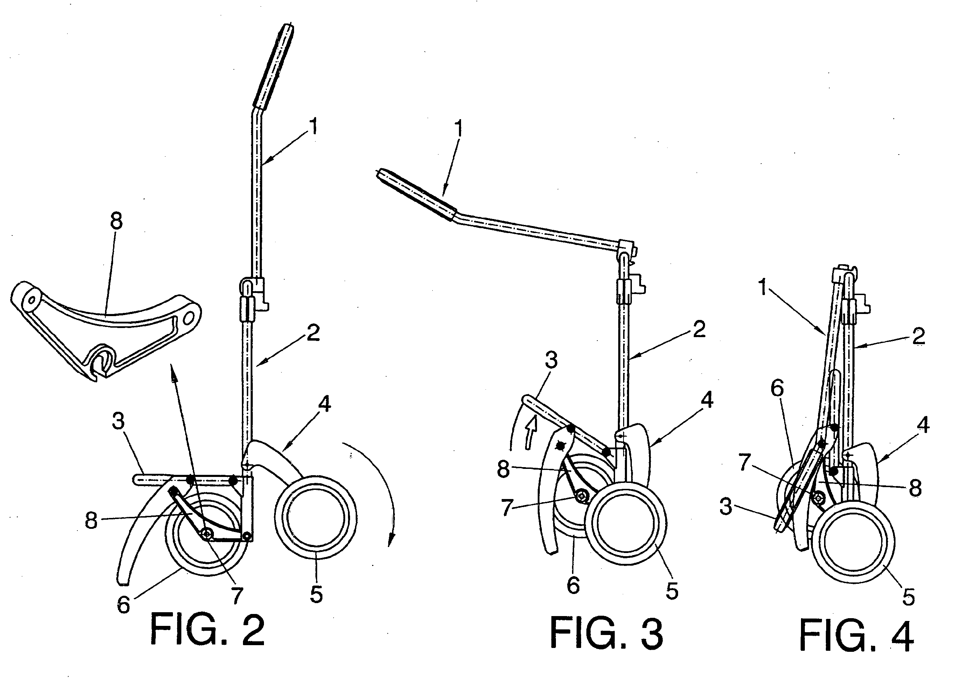

Figures 2 to 4 show different views of the folding process of the cart.

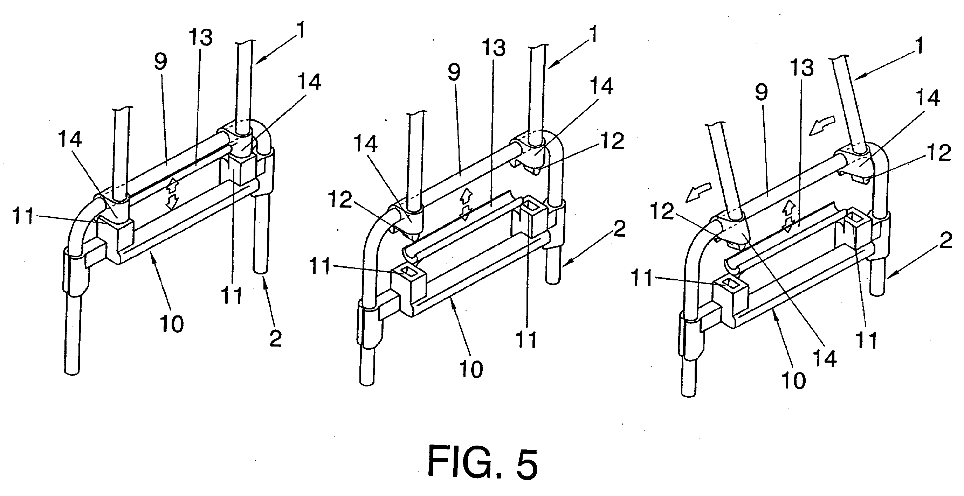

Figure 5 shows the folding process of a top part or handle that forms the frame structure of the whole cart.

### DESCRIPTION OF THE PREFERRED EMBODIMENT

Considering the numbering used in the figures, the shopping cart is defined by a frame structure comprised of a top folding part (1) and a bottom part (2) or primary structure, to whose low area a base or folding seat platform (3) of a bag not represented in the figures, is coupled, as well as a rear support (4), also folding. The support is provided with two rear wheels (5). Furthermore, there is a pair of front wheels (6) coupled, by means of a transversal shaft (7), to a pair of side bars (8) that joint by their ends in the folding base (3) and a bottom part (2) of the frame structure. The joint of this pair of front wheels (6) is located under the straight line that joins each one of the two end rotating points of the cited side bars (8).

The top part (1) of the frame structure is jointedly coupled to a top cross member (9) of the bottom part (2) and has locking means to keep this top part stable in the unfolded position as a continuation of the bottom part (2) of the frame structure, whereas in the folded position, the top part folds downward against the bottom part (2).

These locking means consist of a transversal support (10) coupled to and guided on the branches of the bottom part (2) of the frame, at the same time that said support (10) in a raised position provides immobilization of the top part (1) of the frame by means of some complementary anchoring parts connected to the transversal support (10) and top part (1) of the frame. The transversal support (10) has stable hooking means in the raised position to ensure unfolding.

In one embodiment, the transversal support (10) has female parts defined by some side recesses (11) wherein the male parts of the top part of the frame structure in the unfolded position are inserted. Said male parts (12) are defined by the far ends of the reversed U-shaped top part (1) that forms part of the frame structure.

Another alternative to what has been said above is that the transversal support has male parts that are inserted in female parts formed in the top part of the frame structure in the unfolded position.

On the other hand, the stable hooking means of the transversal support (10) in the raised position consist of an enveloping portion (13) integral to the support that is coupled by pressure to the cross member (9) of the bottom part (2) of the frame structure encircling said cross member (9).

The jointed coupling of the top part (1) of the frame structure is coupled to the bottom part (2) by means of side parts (14) integral to two branches of the top part (1) of the frame structure.

## Claims

1. A shopping cart, that comprises a frame structure comprised of a top part (1) or handle and a bottom part (2) or primary structure, to whose lower area a folding seat base or platform (3) for a bag is coupled, a rear support (4) with two rear wheels (5), a pair of front wheels (6) and a leg coupled to the cited base (3), the pair of front wheels (6) coupled to a pair of side bars (8) that are articulated by one of their ends to the folding seat base (3), **characterized in that** the front wheels (6) are coupled to the side bar by means of a single transversal shaft (7) which is coupled by its ends to the two side bars (8), and **in that** the side bars (8) are articulated by their other ends to the bottom part (2) of the frame structure.

2. A shopping cart, according to claim 1, **characterized in that** the top part (1) of the frame structure is folding coupling jointedly to a top cross member (9) of the bottom part (2), and locking means are included in order to keep this top part (1) stable in the unfolded position as a continuation of the bottom part (2) of this frame structure, whereas in the unfolded position the top part (1) folds downward against the bottom part (2).

3. A shopping cart, according to claim 2, **characterized in that** the locking means to keep this top part of the frame stable in the unfolded position consist of a transversal support (10) coupled to and guided on the branches of the bottom part (2) of the frame, and said support (10) in a raised position provides immobilization of the top part (1) of the frame by means of complementary anchoring means connected to the transversal support (10) and top part (1) of the frame, the transversal support (10) having stable hooking means in the raised position in order to ensure the unfolding.

4. A shopping cart, according to claim 3, **characterized in that** the transversal support has female parts (11) wherein male parts of the top part of the structure frame are inserted in the unfolded position.

5. A shopping cart, according to claim 3, **characterized in that** the transversal support has male parts that are inserted in female parts formed in the top part of the frame structure in the unfolded position.

6. A shopping cart, according to any of the claims 3 to 5, **characterized in that** the stable hooking means of the transversal support (10) in the raised position consist of an enveloping portion (13) integral to the transversal support (10) that is coupled by pressure to the cross member (9) of the bottom part (2) of the frame structure encircling said cross member (9).

7. A shopping cart, according to claim 4, **characterized in that** the male parts constitute far ends (12) of the top part of the frame structure.

8. A shopping cart, according to claim 3, **characterized in that** the top part (1) of the frame structure is coupled to the bottom part (2) by means of side parts (14) integral to two branches of the top part (1) of the frame structure.

9. A shopping cart, according to claim 1, **characterized in that** the joint of the pair of front wheels (6) is located under the straight line that joins each one of the two end rotating points of the side bars (8).

## Patentansprüche

1. Ein Einkaufswagen, der eine Rahmenstruktur umfasst, die einen Oberteil (1) oder Haltegriff und einen Unterteil (2) oder Primärstruktur, an deren unterem Bereich eine klappbare Auflagebasis oder Plattform (3) für eine Tasche befestigt ist, eine hintere Stütze (4) mit zwei Hinterrädern (5), ein Paar von Vorderrädern (6) und ein an der genannten Basis (3) befestigtes Bein umfasst, das Paar von Vorderrädern (6) befestigt an einem Paar von Seitenstangen (8), die an einem ihrer Enden an der klappbaren Auflagebasis (3) angelenkt sind, **dadurch gekennzeichnet, dass** die Vorderräder (6) mittels einer Querachse (7) an den Seitenstangen befestigt ist, die mit ihren Enden an den beiden Seitenstangen (8) befestigt ist, und dass die Seitenstangen (8) mit ihren anderen Enden an dem Unterteil (2) der Rahmenstruktur angelenkt sind.

2. Ein Einkaufswagen gemäß Anspruch 1, **dadurch gekennzeichnet, dass** der Oberteil (1) der Rahmenstruktur klappbar gelenkig an einer oberen Querstrebe (9) des Unterteils (2), und Sperrmittel enthalten sind, um diesen Oberteil (1) in der ausgeklappten als Fortsetzung des Unterteils (2) der Rahmenstruktur stabil zu halten, während der Oberteil (1) in der zusammengeklappten Stellung gegen das Unterteil (2) nach unten klappt.

3. Ein Einkaufswagen gemäß Anspruch 2, **dadurch gekennzeichnet, dass** die Sperrmittel zum stabilen Halten dieses Oberteils des Rahmens in der ausgeklappten Stellung aus einem Querträger (10) bestehen, der an den Armen des Unterteils (2) befestigt und geführt ist, und dieser Träger (10) in einer angehobenen Stellung mittels ergänzender, am Querträger (10) und am Oberteil (1) verbundener Befestigungsmittel eine Fixierung des Oberteils (1) des Rahmens gewährt, wobei der Querträger (10) stabile, in der angehobenen Stellung einhakende Mittel aufweist, um das Auseinanderklappen zu sichem.

4. Ein Einkaufswagen gemäß Anspruch 3, **dadurch gekennzeichnet, dass** der Querträger Buchsenteile (11) aufweist, in die in der auseinandergeklappten Stellung Steckteile des Oberteils der Rahmenstruktur eingesteckt werden.

5. Ein Einkaufswagen gemäß Anspruch 3, **dadurch gekennzeichnet, dass** der Querträger Einsteckteile aufweist, die in der auseinandergeklappten Stellung in am Oberteil des Rahmens gebildete Buchsenteile eingesteckt werden.

6. Ein Einkaufswagen gemäß eines der Ansprüche 3 bis 5, **dadurch gekennzeichnet, dass** die stabilen, in der angehobenen Stellung einhakenden Mittel aus einem mit dem Querträger (10) ganzheitlichen Gehäuseteil (13) besteht, das mittels Druck an der Querstrebe (9) des Unterteils (2) der Rahmenstruktur befestigt ist und dabei diese Querstrebe (9) umgibt.

7. Ein Einkaufswagen gemäß Anspruch 4, **dadurch gekennzeichnet, dass** die Steckteile entfernte Enden (12) des Oberteils der Rahmenstruktur darstellen.

8. Ein Einkaufswagen gemäß Anspruch 3, **dadurch gekennzeichnet, dass** der Oberteil (1) der Rahmenstruktur am Unterteil (2) mittels von Seitenteilen (14) befestigt ist, die mit den beiden Armen des Oberteils (1) der Rahmenstruktur ganzheitlich ist.

9. Ein Einkaufswagen gemäß Anspruch 1, **dadurch gekennzeichnet, dass** die Befestigung des Paars von Vorderrädern (6) sich unterhalb der graden Linie befindet, die die beiden endseitigen Drehpunkte der Seitenstangen (8) verbindet.

## Revendications

1. Un chariot composé d'une structure d'armature qui comprend une partie supérieure (1) ou poignée et une partie inférieure (2) ou structure primaire, dont la zone inférieure s'encastre sur une base de plaque ou plate-forme pliable (3) pour un sac, un support arrière (4) avec deux roues arrière (5), une paire de roues avant (6) et une béquille couplée à la base mentionnée (3), la paire de roues avant étant (6) fixée à une paire de barres latérales (8) qui sont articulées sur l'une de leurs extrémités à la base de la plaque pliable (3), **caractérisé par le fait que** les roues avant (6) sont couplées à la barre latérale au moyen d'un axe transversal unique (7) qui est fixé par ses extrémités aux deux barres latérales (8), et **par le fait que** les barres latérales (8) sont articulées par leurs autres extrémités à la partie inférieure (2) de la structure de l'armature.

2. Un chariot, d'après la revendication 1, **caractérisé par le fait que** la partie supérieure (1) de la structure de l'armature s'emboîte et s'unit de façon à ce qu'elle puisse être repliée à une jambe croisée supérieure (9) de la partie inférieure (2), et accompagné des moyens de blocage pour maintenir cette partie supérieure (1) stable en position déployée comme prolongement de la partie inférieure (2) d'une structure, tandis que dans la position déployée, la partie supérieure (1) se replie vers le bas, contre la partie inférieure (2).

3. Un chariot, d'après la revendication 2, **caractérisé par le fait que** les moyens de blocage pour stabiliser cette partie supérieure de l'armature, en position déployée, se composent d'un support transversal (10) fixé et guidé sur les bras de la partie inférieure (2) de l'armature et ledit support (10) en position élevée immobilise l'élément supérieur (1) de l'armature par le biais des moyens d'ancrage complémentaires reliés au support transversal (10) et à la partie supérieure (1) de l'armature, le support transversal (10) disposant de moyens de fixation stables en position élevée pour permettre de déployer le chariot.

4. Un chariot, d'après la revendication 3, **caractérisé par le fait que** le support transversal se compose d'éléments « femelle » (11) où sont introduits les éléments « mâle » de la partie supérieure de l'armature de la structure en position déployée.

5. Un chariot, d'après la revendication 3, **caractérisé par le fait que** le support transversal se compose d'éléments « mâle » qui sont introduits dans les éléments « femelle » formés sur la partie supérieure de l'armature de la structure en position déployée.

6. Un chariot, d'après les revendications 3 à 5, **caractérisé par le fait que** les moyens de fixations stables du support transversal (10) en position élevée comprennent une partie enveloppante (13) intégrée au support transversal (10) qui se fixe par pression sur la jambe croisée (9) de la partie inférieure (2) de la structure de l'armature qui entoure ladite jambe croisée (9).

7. Un chariot, d'après la revendication 4, **caractérisé par le fait que** les éléments « mâle » forment les extrémités éloignées (12) de la partie supérieure de la structure de l'armature.

8. Un chariot, d'après la revendication 3, **caractérisé par le fait que** la partie supérieure (1) de la structure de l'armature s'emboîte dans la partie inférieure (2) au moyen des parties latérales (14) intégrées dans les deux bras de la partie supérieure (1) de la structure de l'armature.

9. Un chariot, d'après la revendication 1, **caractérisé par le fait que** le joint des deux roues avant (6) est placé sous la ligne droite qui relie chacun des deux points rotatifs de l'extrémité des barres latérales (8).
